# EUROPÄISCHE PATENTSCHRIFT

(11) **EP 1 744 984 B1**
(45) Veröffentlichungstag und Bekanntmachung des Hinweises auf die Patenterteilung: **29.07.2009**
(21) Anmeldenummer: 05737418.3
(22) Anmeldetag: 06.05.2005
(51) Int. Cl.: B67B 1/00

(54) **VERFAHREN UND VORRICHTUNG FÜR DAS BEFÜLLEN VON OFFENEN GEBINDEN MIT EINEM PULVERFÖRMIGEN PRODUKT**
METHOD AND DEVICE FOR FILLING OPEN CONTAINERS WITH A POWDERY PRODUCT
PROCEDE ET DISPOSITIF POUR REMPLIR DES EMBALLAGES OUVERTS D'UN PRODUIT PULVERULENT

(30) Priorität: 14.05.2004 DE 102004024476; 30.07.2004 DE 102004037107
(43) Veröffentlichungstag der Anmeldung: 24.01.2007
(73) Patentinhaber: Haver & Boecker oHG, 59302 Oelde (DE)
(72) Erfinder: COMBRINK, Alois, 59302 Oelde (DE)
(74) Vertreter: Specht, Peter
(86) Internationale Anmeldenummer: PCT/EP2005/004930
(87) Internationale Veröffentlichungsnummer: WO 2005/110849

(56) Entgegenhaltungen:
- CH-A- 611 216
- CH-A5- 683 251
- DE-A1- 3 640 520
- DE-A1- 3 811 880
- DE-C1- 10 132 715
- DE-C2- 3 922 738
- DE-U- 8 910 081
- GB-A- 661 224
- GB-A- 1 011 653
- US-A- 3 209 844
- US-A- 3 404 742
- US-A- 3 589 411
- US-A- 4 275 775

## Beschreibung

Die Erfindung betrifft eine Vorrichtung und ein Verfahren zur Befüllung eines offenen Gebindes, vorzugsweise eines offenen Sackes nach dem Oberbegriff der Ansprüche 1 und 13.

Eine gattungsgemäße Vorrichtung ist aus der DE 89 10 081 U bekannt.

Um ein Produkt genau abzuwiegen, ist es durchaus üblich, den Produktstrom in Grob- und Feinstrom aufzuteilen. Hierbei kann z.B. eine Schnecke als Dosierorgan zum Einsatz kommen. Diese Art der Produktzufuhr dient ausschließlich der Erzielung einer hohen Gewichtsgenauigkeit.

Beim Nettosystem wird der Produktstrom beim Einfüllen in die Waage u.U. in Fein- und Grobstrom aufgeteilt, beim Bruttosystem erfolgt diese Aufteilung beim Einfüllen in das Gebinde.

Das Bruttosystem hat im Allgemeinen den Nachteil, dass es nur eine geringe Leistung aufweist. Gleichzeitig kann hierbei in der Phase des Wiegens keine Produktverdichtung erfolgen, da jede Art der Manipulation eine Gewichtsbeeinflussung zur Folge hat.

Es gibt auch Bruttosysteme, die während des Wiege und Füllprozesses in einem Wiegeunkritischen Moment zwischenverdichten, die Folge sind aber immer Leistungseinbußen.

Zum Stand der Technik werden die US 3 209 844 A, die DE 36 40 520 A1, die US 3 404 742 A, die CH 683 251 A5, die DE 38 11 880 A1, die US3 589 411 A, die GB 1011653 A. die DE 101 32 715 C1, die CH 611 216 A5, die US 4 275 775 A und die GB 661 224 A genannt.

Die US 3 209 844 beschreibt eine Fülleinrichtung, bei der in einer Waage ein Grobgewicht vordosiert wird (untergewichtig) welches dann vollständig in den Füllbehälter entleert wird. Anschließend wird über ein Volumendosierrad ein Feinstrom zudosiert.

Die DE 36 40 520 A beschreibt eine Fülleinrichtung, mit der die abzufiillende Menge zunächst abgewogen und dann direkt in einen Sack abgegeben wird.

Die US 3 404 742 beschreibt eine Wägeeinrichtung, mit der Füllgut im Grobstrom volumetrisch vordosiert in einen Waagebehälter abgegeben und dann der Feinstrom zudosiert wird. Anschließend wird die gesamte Füllgutportion abgegeben.

Die CH 683 251 A5 verwendet eine Differentialwaage als Wägeeinrichtung und gibt das abgegebene Produkt direkt aus der Waage als Grob- und Feinstrom ab.

Die DE 38 11 880 A1 beschäftigt sich mit dem Problem, das Füllgut bei einem ansonsten bekannten Füllvorgang ständig unter Vakuum zu halten, um eine Kontamination durch Umgebungseinflüsse zu verhindern.

Die US 3 589 411 beschreibt eine Abfüllvorrichtung mit zwei voneinander getrennten Zuführungen in einen zu befüllenden Sack, wobei jede der Zuführungen einen eigenen Waagemechanismus aufweist, mit denen abwechselnd das Material abgewogen wird. Eine Schleuse mit einem sich mit konstanter Umdrehung drehenden Rad dient der Verdichtung des Produktes, so dass das abzufüllende Material vorverdichtet im Takt der umlaufenden Kammern in einen Füllbehälter fällt. Das Rad dient somit der Entlüftung und Kompaktierung des Füllgutes. (Kontinuierliche Förderung da Produktverdichtung)

All die vorstehend genannten Vorrichtungen weisen im Grunde keine Vorrichtungen zur Produktverdichtung auf, oder sind für eine geringe Leistung ausgelegt. Pulverförmige Produkte, die zudem sehr fein sind, haben die Eigenart, dass sie während des Transportierens und auch während des Füllvorganges Luft aufnehmen, was zu einer erheblichen Volumenvergrößerung fahrt. Dies hat zur Folge, dass im Normalfall die als Verpackung verwendeten Säcke ein entsprechend großes Volumen aufweisen müssen, damit das Produkt in den Säcken ausreichend Platz findet.

Nachdem das Produkt nach dem Befüllen der Säcke die aufgenommene Luft wieder ganz oder teilweise abgegeben hat, beispielsweise durch Einleiten von Verdichtungsmaßnahmen oder aber nach dem Ablauf einer bestimmten Zeit, nimmt das Produkt ein entsprechend kleineres Volumen ein, was zur Folge hat, dass der Sack bzw. die Sackware zu groß ist, d.h. es wird Packmittel verschenkt, was zu erhöhten Kosten und zu Problemen beim Stapeln der Säcke führt. Der vorstehend genannte Stand der Technik ist nicht dazu geeignet, diese Probleme zufriedenstellend zu lösen.

Die Erfindung hat daher die Aufgabe, ein Verfahren und Vorrichtung zum Befüllen von Gebinden mit einem pulverförmigen Produkt zu schaffen, mit denen die vorstehend beschriebene Problem auf einfache Weise behoben werden.

Die Erfindung löst diese Aufgabe in Hinsicht auf die Vorrichtung durch den Gegenstand des Anspruchs 1 und in Hinsicht auf das Verfahren durch den Gegenstand des Anspruchs 13.

Vorteilhafte Ausgestaltungen sind den Unteransprüchen zu entnehmen.

Da die Erfindung das - an sich bekannte - Netto-Waageprinzip nutzt, bei dem zunächst die gesamte Füllgutportion abgewogen wird, bevor sie abgefüllt wird, kann zunächst eine hohe Leistung erzielt werden, da während des eigentlichen Füll- und Verdichtungsvorganges bereits die nächste Portion abgewogen werden kann.

Da nicht sofort der gesamte Volumenstrom in das Gebinde gelangt, wird eine Überfüllung des Gebindes trotz des Einsatzes des Nettoprinzips vermieden. Diese Art der Nachdosierung nach dem Abwiegen mit einem Nettosystem ist aus dem Stand der Technik bekannt (siche DE - C2-3q22738). Sodann erfolgt eine Nachdosierung, bevorzugt begleitet von einer Verdichtung des Produktes im Gebinde bzw. Sack. Der Sack kann damit relativ klein dimensioniert werden.

Besondere Vorteile dieser Vorgehensweise sind:
1. Eine hohe Leistungsfähigkeit der Vorrichtung, da die Nettowaage das Produkt in einem Arbeitsgang entleeren kann;
2. Eine hohe Verdichtungsgeschwindigkeit, da der erste Produktstoß schnell einlaufen kann und einen max. Füllungsgrad des Sackes garantiert, sodass der Verdichtungserfolg optimal ist;
3. Ein proportionales Nachführen des Produktes zum Verdichtungseffekt ohne eine Überfüllung des Gebindes.

Zweckmäßig strömt das restliche Produkt an der Zwischenkammer vorbei und wird direkt in das Gebinde geleitet, wobei das Verhältnis der Aufteilung zwischen der Zwischenkammer und dem direkt in das Gebinde eingeleiteten restlichen Produkt so gewählt wird, dass der Sack zwar ausreichend gefüllt ist, aber keine Überfüllung des Sackes erfolgen kann.

Bevorzugt wird das in das Gebinde eingeleitete Produkt mittels einer Verdichtungseinrichtung verdichtet und während des nun einsetzenden Verdichtungsvorgangs mittels der Verdichtungseinrichtung und der damit verbundenen Volumenreduzierung des Produktes im Gebinde wird das restliche Produkt von der Zwischenkammer aus nachdosiert.

Das erfindungsgemäße Verfahren eignet sich insbesondere auch für den Einsatz an einer rotierenden Füllmaschine, wo die vorgeschalteten Nettowaagen stationär angeordnet sind. Gerade bei einer solchen Konstellation wäre das stufenweise Zuführen des Materials überhaupt nur mit erhöhtem technischem Aufwand oder hohem Leistungsverlust möglich.

Ein mit Luft angereichertes pulverförmiges Produkt hat ein extrem hohes Fließvermögen und kann in seinem Fließverhalten durchaus mit Wasser verglichen werden. Das heißt, dass der Sack am Stutzen sehr gut abgedichtet sein muss, damit kein Produkt nach außen tritt und zur Verschmutzung der Säcke und der Anlage führt.
Diese Abdichtungsmaßnahmen sind zwar auch Bestandteil der Maschine, sind aber einem Verschleiß unterworfen. Des Weiteren ist die Qualität der Abdichtung auch von der Beschaffenheit der Sackware (Falten) abhängig.

Da der Füllspiegel erfindungsgemäß aber stets unterhalb der gefährdeten Zone bleibt, stellen sich die vorstehend erläuterten Probleme nicht mehr. Damit wird eine sichere Arbeitsweise der Vorrichtung gewährleistet.

Vorteilhaft sind im Befüllstutzen Kanäle angeordnet, welche die verdrängte Luft abführen und somit einen Überdruck im Sack verhindern. Wenn der Füllspiegel so hoch steigt, dass diese Kanäle verschlossen werden, ist diese Funktion nicht mehr gegeben.

Gleichzeitig besteht die Gefahr, dass sich Produkt in diesen Kanälen ablagert und nach dem Abnehmen des Sackes austritt und zur Verschmutzung der Anlage und der Säcke führt.

Ein weiterer wichtiger Aspekt beim Befüllen von Säcken ist die Forderung nach einer hohen Sauberkeit der späteren Verschlusszone des Sackes. Diese ist umso wichtiger, wenn ein Verschweißen als Verschluss zum Einsatz kommt, was insbesondere eine hohe Sauberkeit der Folieninnenseite voraussetzt. Gerade auch zur Lösung dieses Problems hat sich das zuvor geschilderte Verfahren bei hoher Füllgeschwindigkeit bestens bewährt.

Nach einer Variante, bei der die Zwischenkammer über den gesamten Trichterquerschnitt ausgebildet ist, und entsprechend die gesamte Materialmenge aufnimmt, regelt das Dosierorgan zunächst auf einen hohen Massenstrom ein..

Besonders bevorzugt steuert oder regelt das Dosierorgan den hohen Massestrom derart, dass es zu keiner Brückenbildung des Stutzens durch Materialaufstauung kommt.

Nach einer Weiterbildung steuert oder regelt das Dosierorgan nach der Schnellbefüllung den durchgelassenen Massenstrom derart, dass es während der Verdichtung des Materials im Gebinde zu keiner Überfüllung des Gebindes kommt.

Nachfolgend wird die Erfindung unter Bezug auf die Zeichnung anhand bevorzugter Ausführungsbeispiele näher beschrieben. Es zeigt:
- Fig. 1a,b: eine schematische Darstellung einer ersten erfindungsgemäßen Vorrichtung zur Befüllung eines Gebindes in zwei aufeinander folgenden Schritten beim Befüllen des Gebindes mittels Nachdosierung mit einer Zellenradschleuse;
- Fig. 2a,b: eine schematische Darstellung einer weiteren Vorrichtung zur Befüllung eines Gebindes in zwei aufeinanderfolgenden Schritten nach und beim Befüllen des Gebindes mittels Nachdosierung mit einem beliebigen Dosierorgan, hier einer Klappe; und
- Fig. 3: eine schematische Darstellung einer weiteren Vorrichtung zur Befüllung eines Gebindes in zwei aufeinanderfolgenden Schritten beim Befüllen des Gebindes, mit einer das gesamte Füllgut aufnehmenden Zwischenkammer, und einem Dosierorgan mit der Möglichkeit der Befüllung des Gebindes, mit regelbarem Grob- und Feinstrom.

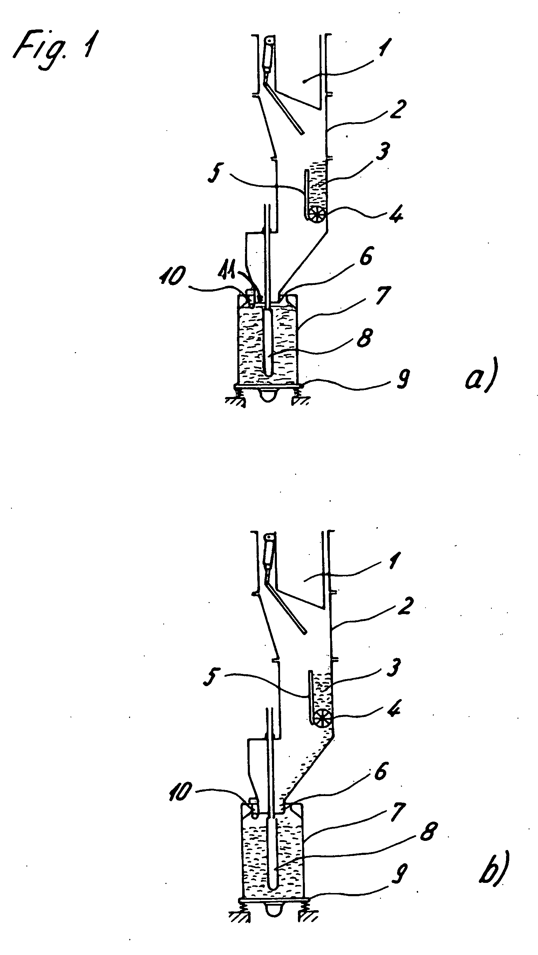

Fig. 1a,b zeigt eine Vorrichtung zur Befüllung eines Gebindes 7 - eines offenen Sackes - mit einer Nettowaage 1, die oberhalb einer Rohr- und/oder Trichteranordnung 2 angeordnet ist, die in einen Stutzen 6 mündet, an welchen ein Gebinde 7 - insbesondere ein offener Sack - angehängt ist.

Als Wägeverfahren wird das sogenannte Netto-Prinzip angewendet, d.h., die Nettowaage 1 wiegt das abzufüllende Produkt portionsweise - z.B. in 25kg Größen - ab und gibt es dann in diesen abgewogenen Portionen ab, wobei es durch die Rohr/Trichteranordnung 2 und den Stutzen 6 in das Gebinde 7 geleitet wird. Dieses Verfahren bietet gegenüber dem Brutto-System den Vorteil einer besonders hohen Anlagenleistung.

Um dabei den nachteiligen Effekt des Überfüllens des Gebindes 7 zu vermeiden, gelangt der Produktstrom oder zumindest ein Teil desselben in eine in der Rohr- und/oder Trichteranordnung angeordnete Zwischenkammer 3. Diese Zwischenkammer 3 nimmt (je nach Luftinhalt des Produktes) einen Anteil des von der Nettowaage abgegebenen Produktes - bevorzugt ca. 20 - 50%, insbesondere ca. 1/3 des Produktes - auf.

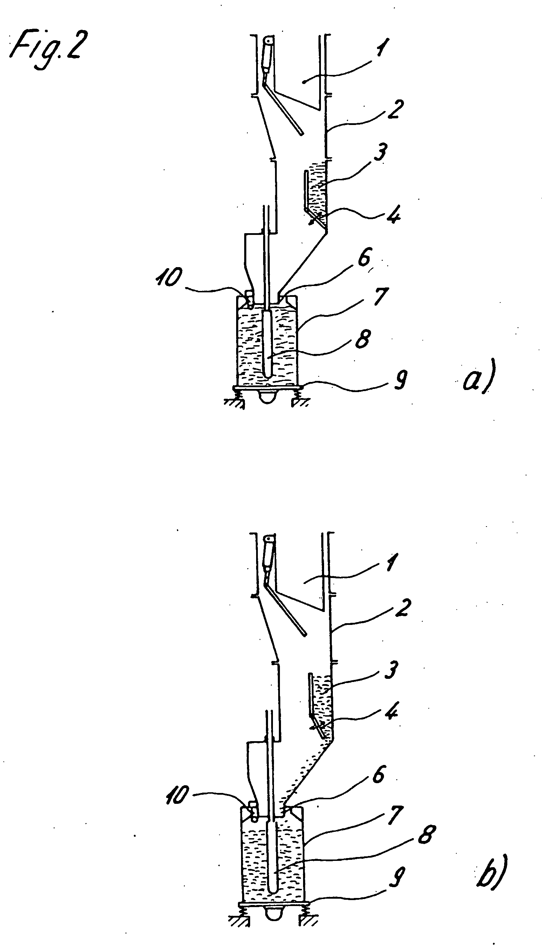

Das restliche Produkt strömt an der Zwischenkammer 3, die nicht den gesamten Querschnitt der Rohr/Trichteranordnung verdeckt, vorbei und gelangt direkt in das Gebinde 7. Das Verhältnis der Aufteilung des Produktes zwischen der Zwischenkammer 3 und dem direkt in das Gebinde eingeleiteten Teil ist dabei so gewählt, dass keine Überfüllung des Sackes erfolgen kann (Fig. 1a, 2a.

In das Gebinde 7 ragt z.B. von dessen offenen, oberen Seite her eine Verdichtungseinrichtung 8 oder eine anderweitig angeordnete Verdichtungseinrichtung 9 ein, die dazu ausgelegt ist, das in das Gebinde 7 eingeleitete Produkt so zu verdichten, dass es einen Teil der aufgenommenen Luft abgibt.

Während des nun einsetzenden Verdichtungsvorgangs mittels der Verdichtungseinrichtung 8/9 und der damit verbundenen Volumenreduzierung des Produktes wird das restliche Material von der Zwischenkammer 3 aus so nachdosiert, dass die Verdichtungsgeschwindigkeit und der Volumenstrom, mit dem das Gebinde befüllbar ist, korrespondieren. Dies hat zur Folge, dass eine maximale Verdichtungsgeschwindigkeit gewährleistet ist, ohne dass dabei eine Überfüllung eintritt (Fig. 1b, 2b.

Die Verdichtungseinrichtung kann an sich auf beliebige Art realisiert werden, beispielsweise mittels einer Art Sonde (Bezugszeichen 8, die z.B. Schwingungen erzeugt oder eine Vakuumlanze etc. ) und/oder mit Hilfe einer Rüttelanordnung, z.B. mit Hilfe eines Rütteltischs (siehe 9), auf dem das Gebinde aufliegt.

Die Zwischenkammer 3 kann aus einzelnen Segmenten bestehen, also aus mehreren Unterkammern, die nacheinander entleert werden. Als günstigste Version hat sich dabei der Einsatz einer Zellenschleuse als Dosierorgan 4 erwiesen, wobei die Kammer über die flügelradartige Zellenschleuse kontinuierlich entleert wird (Fig. 1a,b). Dabei lassen sich die Drehzahl und somit die Dosiergeschwindigkeit an den Prozess anpassen. Alternativ kann das Dosierorgan auch auf andere Weise ausgeführt werden (Fig. 2, wo das Dosierorgan nach Art einer Klappe ausgebildet ist).

Da der Luftinhalt der abzufüllenden Produkte sich durch unterschiedliche Ablagerungszeiten oftmals verändert, bietet es sich an, die Zwischenkammer derart auszulegen, dass ihr Volumen und/oder Füllstand variabel einstellbar ist. Dies lässt sich z.B. durch eine verstellbare seitliche Begrenzungswand 5 an der Zwischenkammer 3 realsieren.

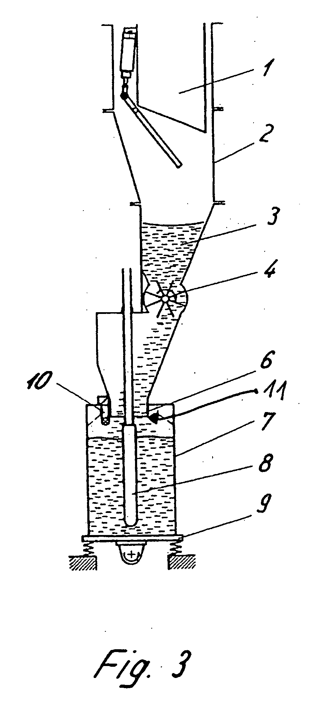

Alternativ zu der Vorrichtung Fig. 1a,b und Fig. 2a,b ist die Verwendung einer Ausführung der Zwischenkammer 3 gemäß Fig. 3 möglich. Bei dieser Anordnung erstreckt sich die Zwischenkammer 3 über den gesamten Trichterquerschnitt der Rohr-/Trichteranordnung 2 und nimmt somit die gesamte Füllmenge des aus der Nettowaage 1 abgeworfenen Materials auf. An ihrem unteren Ende befindet sich eine Dosiereinrichtung 4, welche vorteilhaft als Zellenradschleuse, aber auch als andere Dosiereinrichtung bekannter Bauart, ausgeführt wird.

Das in die derart gestaltete Zwischenkammer abgeworfene Material kann zu Beginn des Befüllvorganges das Dosierorgan 4 im Grobstrom durchqueren. Das Dosierorgan hat hier vorteilhaft die Eigenschaft, den Strom derart zu begrenzen, dass es zu keinerlei Brückenbildung bzw. zu einem durch innerer Reibung des Materials z.B. in einem zugelaufenen Füllstutzen verzögertem Durchlauf des Materials in das Gebinde 7 kommen kann. Nach der anfänglichen Schnellbefüllung regelt das Dosierorgan 4 je nach Füllstand im Gebinde 7 den Volumenstrom, gemäß der parallel einsetzenden Verdichtung mittels der Verdichtungseinrichtung 8, 9 im Sack, derart herunter, dass es während des Befiillvorganges im Gebinde 7 zu keinerlei Überfüllung kommen kann.

Ein weiterer Vorteil dieses Verfahrens besteht darin, dass eine kurzzeitige Sperrung des Dosierorgans 4 - zu Beginn des Befüllvorganges, - eine zeitliche Entkoppelung des Materialabwurfes und der Notwendig eines bereits aufgesteckten Gebindes auf dem Stutzen ermöglicht. Ferner benötigt dieses Verfahren keine volumetrische Anpassung der Zwischenkammer 3 mittels einer z. B. verstellbaren Seitenwand, da die Zwischenkammer nicht einen definierten Teil des abgeworfenen Materials aufnehmen muss, sondern generell das gesamte abgeworfene Material aufnimmt. Und gegen Schüttgewichts-, und damit Volumenschwankungen, unempfindlich ist.

Da sich aber oftmals auch die Verdichtungseigenschaft des Produktes verändert, ist es weiterhin möglich, die Anlage vorzugsweise mit dem vorteilhaften Sensor 10 auszurüsten der unterhalb des Stutzenauslaufs 11 den Füllstand des Produktes erfasst. Mit einer solchen Technik ist es nun möglich die Dosiereinrichtung so zu steuern, dass eine Überfüllung nicht auftritt. Andernfalls müsste beim Befüllvorgang ein Sicherheitsabstand zwischen dem Produktspiegel und dem Stutzenauslauf 11 vorgesehen werden, was dann aber zu einer Reduzierung der Verdichtungsgeschwindigkeit führen würde.

Ein weiterer wichtiger Punkt ist die Übergabe des gefüllten Gebindes 7 in die Verschlussposition. Um hier einen sicheren Verschluss des Gebindes 7 zu garantieren muss oberhalb des Produktspiegels ein gewisser Freiraum sein, damit die Werkzeuge für das Verschließen den Sack vernünftig greifen können. Auch hierbei ist der zuvor beschriebene Sensor 10 von Vorteil, da dieser den Verdichtungsvorgang so steuern könnte, dass der erforderliche Freiraum gewährleistet ist.

Die zuvor geschilderte Lösung sichert zusammengefasst eine hohe Leistung der Anlage, eine kompakte Sackabmessung, eine hohe Sauberkeit der Säcke und der Anlage, eine hohe Sicherheit des Sackverschlusses und eine hohe Gewichtsgenauigkeit.

Ein Vorteil der Trennung von Verwiegung und Zwischenspeicherung liegt in einem einfacheren Aufbau der Waage sowie einer Leistungssteigerung, da während des Füllvorgangs bereits der nächste Wägevorgang erfolgen kann.

Besonders vorteilhaft ist die Anlage für rotierende Füllmaschinen geeignet.

### Bezugszeichen

- Nettowaage: 1
- Trichteranordnung: 2
- Zwischenkammer: 3
- Dosierorgan: 4
- Begrenzungswand: 5
- Stutzen: 6
- Gebinde: 7
- Verdichtungseinrichtung: 8
- Verdichtungseinrichtung: 9
- Sensor: 10
- Stutzenauslauf: 11

## Patentansprüche

1. Vorrichtung zur Befüllung eines oben offenen Gebindes (7), vorzugsweise eines offenen Sackes, mit einem pulverförmigen Produkt, mit folgenden Merkmalen:
- einer Nettowaage (1) oberhalb einer Rohr- und/oder Trichteranordnung (2),
- die in einen Füllstutzen (6) mündet, der oberhalb des zu befüllenden Gebindes (7) angeordnet ist und vorzugsweise in dieses hineinragt,
- eine Verdichtungseinrichtung (8 und/oder 9) zur Verdichtung des in das Gebinde (7) eingefüllten Produktes, **gekennzeichnet durch**
- eine der Nettowaage nach- und dem Gebinde (7) vorgeschaltete Zwischenkammer (3) zur temporären Aufnahme eines Teils des von der Nettowaage abgegebenen Produkts, und
- wobei die Zwischenkammer (3) in der Rohr- und/oder Trichteranordnung (2) angeordnet ist und sich über einen Teil des Querschnittes der Rohr- und/oder Trichteranordnung (2) erstreckt, so dass ein Teil des von der Nettowaage abgegebenen Produktes direkt in das Gebinde und ein weiterer Teil über die Zwischenkammer (3) in das Gebinde (7) gelangt.

2. Vorrichtung nach Anspruch 1, **dadurch gekennzeichnet, dass** die Zwischenkammer (3) dazu ausgelegt ist, einen Anteil des von der Nettowaage abgegebenen Produkts - bevorzugt ca. 20 - 50%, insbesondere ca. 1/3 des Produktes - temporär aufzunehmen.

3. Vorrichtung nach einem der vorstehenden Ansprüche, **gekennzeichnet durch** einen Füllstandsensor (10) zum Sensieren eines Füllstandes im Gebinde.

4. Vorrichtung nach einem der vorstehenden Ansprüche, **gekennzeichnet** wobei die Zwischenkammer (3) mit einem Dosierorgan (4) zur dosierten Abgabe des in der Zwischenkammer (3) enthaltenen Produktes in das Gebinde (7) versehen ist.

5. Vorrichtung nach einem der vorstehenden Ansprüche, **dadurch gekennzeichnet, dass** die Zwischenkammer (3) aus mehreren Unterkammern besteht, die separat entleerbar sind.

6. Vorrichtung nach einem der vorstehenden Ansprüche, **dadurch gekennzeichnet, dass** das Dosierorgan (4) als Zellenschleuse ausgebildet ist.

7. Vorrichtung nach einem der vorstehenden Ansprüche, **dadurch gekennzeichnet, dass** das Dosierorgan (4) als steuerbare Schwenkklappe ausgebildet ist.

8. Vorrichtung nach einem der vorstehenden Ansprüche, **dadurch gekennzeichnet, dass** das Volumen der Zwischenkammer veränderlich ist.

9. Vorrichtung nach einem der vorstehenden Ansprüche, **dadurch gekennzeichnet, dass** im Füllstutzen Entlüftungskanäle angeordnet sind..

10. Vorrichtung nach einem der vorstehenden Ansprüche, **dadurch gekennzeichnet, dass** die Verdichtungseinrichtung (8) als in das Gebinde ragende Sonde und/oder als Rüttelanordnung ausgelegt ist.

11. Vorrichtung nach einem der vorstehenden Ansprüche, **dadurch gekennzeichnet, dass** die Verdichtungseinrichtung (8 und/oder 9) einen Rütteltisch umfasst, auf dem das Gebinde aufliegt.

12. Vorrichtung nach einem der vorstehenden Ansprüche, **dadurch gekennzeichnet, dass** sie als rotierende Füllmaschine ausgelegt ist.

13. Verfahren zum Befüllen eines Gebindes (7) mit einem schüttfähigen Produkt mit Hilfe einer Vorrichtung zur Befüllung eines oben offenen Gebindes (7), vorzugsweise eines offenen Sackes, mit einem pulverförmigen Produkt, mit folgenden Merkmalen: einer Nettowaage (1) oberhalb einer Rohr- und/oder Trichteranordnung (2), die in einen Füllstutzen (6) mündet, der oberhalb des zu befüllenden Gebindes (7) angeordnet ist und vorzugsweise in dieses hineinragt, und mit einer der Nettowaage nach- und dem Gebinde (7) vorgeschalteten Zwischenkammer (3) zur temporären Aufnahme zumindest eines Teils des von der Nettowaage abgegebenen Produkts und mit einer Verdichtungseinrichtung (8 und/oder 9) zur Verdichtung des in das Gebinde (7) eingefüllten Produktes, wobei die Zwischenkammer (3) mit einem Dosierorgan (4) zur dosierten Abgabe des in der Zwischenkammer (3) enthaltenen Produktes in das Gebinde (7) versehen ist, bei dem
a. das Produkt von der Nettowaage über die Rohr- und/oder Trichteranordnung (5) in das Gebinde (7) entleert wird, und
b. bei dem ein Teil des Produktes temporär in der Zwischenkammer (3) aufgenommen wird, bevor es in das Gebinde (7) geleitet wird und das restliche Produkt an der Zwischenkammer (3) vorbeiströmt und direkt in das Gebinde (7) geleitet wird, wobei das Verhältnis der Aufteilung zwischen der Zwischenkammer (3) und dem direkt in das Gebinde eingeleiteten restlichen Produkt so gewählt wird, dass keine Überfüllung des Sackes erfolgen kann, oder
c. bei dem das gesamte Produkt temporär in der Zwischenkammer (3) aufgenommen wird, bevor es in das Gebinde (7) geleitet wird, wobei das Dosierorgan zunächst einen hohen Massestrom steuert oder regelt und nach der Schnellbefiillung den durchgelassenen Massestrom derart steuert oder regelt, dass es während der Verdichtung des Materials im Gebinde zu keiner Überfüllung des Gebindes kommt.

14. Verfahren nach Anspruch 13, **dadurch gekennzeichnet, dass** das in das Gebinde (7) eingeleitete Produkt mittels einer Verdichtungseinrichtung (8 und/oder 9) verdichtet wird.

15. Verfahren nach Anspruch 13 oder 14, **dadurch gekennzeichnet, dass** während des Verdichtungsvorgangs mittels der Verdichtungseinrichtung (8, 9) und der damit verbundenen Volumenreduzierung des Produktes das restliche Material von der Zwischenkammer (3) aus nachdosiert wird.

16. Verfahren nach einem der vorstehenden Ansprüche 13 bis 15, **dadurch gekennzeichnet, dass** der Füllstand im Gebinde mit einem Füllstandsensor (10) überwacht wird und in Abhängigkeit vom Füllstand die Dosierung gesteuert wird.

17. Verfahren nach einem der Ansprüche 13 bis 16, **dadurch gekennzeichnet, dass** die Verdichtungsgeschwindigkeit und der Volumenstrom, mit dem das Gebinde (7) befüllt wird, aufeinander abgestimmt sind, so dass in keinem Moment des Befüllvorganges des Gebindes (7) eine Überfüllung desselben eintritt.

18. Verfahren nach Anspruch 17, **dadurch gekennzeichnet, dass** das Dosierorgan den Massestrom derart steuert oder regelt, dass es zu keiner Brückenbildung im Bereich des Stutzens (6) durch Materialaufstauung kommt.

## Claims

1. Device for filling a container (7) open at the top, preferably an open bag, with a product in powder form, having the following features:
- a net-weight weighing device (1) above a tube and/or hopper arrangement (2),
- which opens into a filling pipe (6) arranged above the container (7) to be filled and preferably extends into it,
- a compacting device (8 and/or 9) for compacting the product filled into the container (7),
**characterised in that** it comprises
- an intermediate chamber (3) positioned downstream from the net-weighing device and upstream from the container (7) for holding temporarily part of the product discharged by the said weighing device, and
- such that the intermediate chamber (3) is arranged in the tube and/or hopper arrangement (2) and extends over part of the cross-section of the said tube and/or hopper arrangement (2), so that part of the product discharged by the weighing device passes directly into the container and another part passes into the container (7) via the intermediate chamber (3).

2. Device according to Claim 1, **characterised in that** the intermediate chamber (3) is designed to hold temporarily a proportion of the product discharged by the weighing device, preferably around 20 to 50% and in particular approximately 1/3 of the said product.

3. Device according to either of the preceding claims, **characterised in that** it comprises a filling-level sensor (10) to detect the filling level in the container.

4. Device according to any of the preceding claims, **characterised in that** the intermediate chamber (3) is provided with a dosing device (4) for the metered delivery of the product present in the intermediate chamber (3) into the container (7).

5. Device according to any of the preceding claims, **characterised in that** the intermediate chamber (3) consists of a plurality of part-chambers, which can be emptied separately.

6. Device according to any of the preceding claims, **characterised in that** the dosing device (4) is designed as a cellular charging valve.

7. Device according to any of the preceding claims, **characterised in that** the dosing device (4) is designed as a controllable pivoting flap-valve.

8. Device according to any of the preceding claims, **characterised in that** the volume of the intermediate chamber can be varied.

9. Device according to any of the preceding claims, **characterised in that** venting ducts are arranged in the filling tube.

10. Device according to any of the preceding claims, **characterised in that** the compacting device (8) is designed as a probe that projects into the container and/or as a vibrator arrangement.

11. Device according to any of the preceding claims, **characterised in that** the compacting device (8 and/or 9) comprises a vibrating table on which the container rests.

12. Device according to any of the preceding claims, **characterised in that** it is designed as a rotary filling machine.

13. Method for filling a container (7) with a loose bulk product with the help of a device for filling a container (7) open at the top, preferably an open bag, with a product in powder form, having the following features: a net-weight weighing device (1) above a tube and/or hopper arrangement (2), which opens into a filling tube (6) arranged above the container (7) to be filled and preferably extends into it, and with an intermediate chamber (3) arranged downstream from the net weighing device and upstream from the container (7) for holding temporarily at least part of the product discharged by the weighing device, and with a compacting device (8 and/or 9) for compacting the product filled into the container (7), the intermediate chamber (3) being provided with a dosing device (4) for the metered delivery of the product present in the intermediate chamber (3) into the container (7), in which method:
a. the product is discharged from the net weight weighing device, via the tube and/or hopper arrangement (5) into the container (7), and
b. in which part of the product is held temporarily in the intermediate chamber (3) before it passes into the container (7) and the remainder of the product bypasses the intermediate chamber (3) and passes directly into the container (7), the ratio of the division between the product passing via the intermediate chamber (3) and the remainder that passes directly into the container being chosen such that no overfilling of the bag can take place, or
c. in which all of the product is held temporarily in the intermediate chamber (3) before it passes into the container (7), and the dosing device first measures out or regulates a high mass flow and, after this rapid-filling stage, the mass flow allowed through is controlled or regulated in such manner that during the compacting of the material in the container no overfilling of the container takes place.

14. Method according to Claim 13, **characterised in that** the product passing into the container (7) is compacted by means of a compacting device (8 and/or 9).

15. Method according to Claims 13 or 14, **characterised in that** during the compacting process by means of the compacting device (8, 9) and the resulting volume reduction of the product, the remainder of the material is discharged from the intermediate chamber (3) in a metered manner.

16. Method according to any of the preceding Claims 13 to 15, **characterised in that** the filling level of the container is monitored by a filling-level sensor (10) and the metering of the product is controlled as a function of the filling level.

17. Method according to any of the preceding Claims 13 to 16, **characterised in that** the compaction rate and the volume flow at which the container (7) is filled are matched to one another, so that at no time during the filling process of the container (7) can overfilling thereof take place.

18. Method according to Claim 17, **characterised in that** the dosing device controls or regulates the mass flow in such manner that no clogging takes place in the area of the filling tube (6) by accumulation of the material.

## Revendications

1. Dispositif de remplissage d'un emballage (7) ouvert en haut, de préférence d'un sac ouvert, avec un produit pulvérulent, présentant les caractéristiques suivantes :
- une balance nette (1) au-dessus d'un ensemble de tubes et/ou d'entonnoirs (2),
- qui débouche dans une tubulure de remplissage (6) qui est disposée au-dessus de l'emballage (7) à remplir et pénètre de préférence dans celui-ci,
- un dispositif de compactage (8 et/ou 9) pour le compactage du produit rempli dans l'emballage (7),
**caractérisé par**
- une chambre intermédiaire (3) montée en aval de la balance nette et amont de l'emballage (7) pour le logement temporaire d'une partie du produit délivré par la balance nette, et
- la chambre intermédiaire (3) étant disposée dans l'ensemble de tubes et/ou d'entonnoirs (2) et s'étendant sur une partie de la section de l'ensemble de tubes et/ou d'entonnoirs (2) de sorte qu'une partie du produit délivré par la balance nette parvienne directement dans l'emballage et une autre partie par la chambre intermédiaire (3) dans l'emballage (7).

2. Dispositif selon la revendication 1, **caractérisé en ce que** la chambre intermédiaire (3) est conçue afin de loger temporairement une part du produit délivré par la balance nette, de préférence environ 20 à 50 %, en particulier environ 1/3 du produit.

3. Dispositif selon l'une quelconque des revendications précédentes, **caractérisé par** un capteur de niveau (10) pour la détection d'un niveau dans l'emballage.

4. Dispositif selon l'une quelconque des revendications précédentes, dans lequel la chambre intermédiaire (3) est pourvue d'un organe de dosage (4) pour la délivrance dosée du produit contenu dans la chambre intermédiaire (3) dans l'emballage (7).

5. Dispositif selon l'une quelconque des revendications précédentes, **caractérisé en ce que** la chambre intermédiaire (3) se compose de plusieurs sous-chambres qui peuvent être vidées séparément.

6. Dispositif selon l'une quelconque des revendications précédentes, **caractérisé en ce que** l'organe de dosage (4) est réalisé comme un sas à roue cellulaire.

7. Dispositif selon l'une quelconque des revendications précédentes, **caractérisé en ce que** l'organe de dosage (4) est réalisé comme un clapet pivotant pouvant être commandé.

8. Dispositif selon l'une quelconque des revendications précédentes, **caractérisé en ce que** le volume de la chambre intermédiaire est modifiable.

9. Dispositif selon l'une quelconque des revendications précédentes, **caractérisé en ce que** des canaux de ventilation sont disposés dans la tubulure de remplissage.

10. Dispositif selon l'une quelconque des revendications précédentes, **caractérisé en ce que** le dispositif de compactage (8) est conçu comme une sonde pénétrant dans l'emballage et/ou comme un ensemble vibrant.

11. Dispositif selon l'une quelconque des revendications précédentes, **caractérisé en ce que** le dispositif de compactage (8 et/ou 9) comprend une table vibrante, sur laquelle repose l'emballage.

12. Dispositif selon l'une quelconque des revendications précédentes, **caractérisé en ce qu'**il est conçu comme une machine de remplissage rotative.

13. Procédé de remplissage d'un emballage (7) avec un produit pulvérulent à l'aide d'un dispositif de remplissage d'un emballage (7) ouvert en haut, de préférence d'un sac ouvert, avec un produit pulvérulent, présentant les caractéristiques suivantes : une balance nette (1) au-dessus d'un ensemble de tubes et/ou d'entonnoirs (2) qui débouche dans une tubulure de remplissage (6) qui est disposée au-dessus de l'emballage (7) à remplir et pénètre de préférence dans celui-ci, et avec une chambre intermédiaire (3) montée en aval de la balance nette et en amont de l'emballage (7) pour le logement temporaire d'au moins une partie du produit délivré par la balance nette et avec un dispositif de compactage (8 et/ou 9) pour le compactage du produit rempli dans l'emballage (7), la chambre intermédiaire (3) étant pourvue d'un organe de dosage (4) pour la délivrance dosée du produit contenu dans la chambre intermédiaire (3) dans l'emballage (7), pour lequel
a. le produit est vidé de la balance nette par l'ensemble de tubes et/ou d'entonnoirs (5) dans l'emballage (7), et
b. pour lequel une partie du produit est reçue temporairement dans la chambre intermédiaire (3) avant qu'elle ne soit guidée dans l'emballage (7) et que le produit restant ne s'écoule devant la chambre intermédiaire (3) et soit mené directement dans l'emballage (7), le rapport de répartition entre la chambre intermédiaire (3) et le produit restant introduit directement dans l'emballage étant choisi de sorte qu'un surremplissage du sac ne puisse être effectué, ou
c. pour lequel le produit entier est reçu temporairement dans la chambre intermédiaire (3) avant qu'il ne soit mené dans l'emballage (7), l'organe de dosage commandant ou régulant tout d'abord un flux de matière élevé et commandant ou régulant après le remplissage rapide le flux de matière passé de telle sorte qu'il ne se produise pendant le compactage du matériau dans l'emballage aucun surremplissage de l'emballage.

14. Procédé selon la revendication 13, **caractérisé en ce que** le produit introduit dans l'emballage (7) est compacté au moyen d'un dispositif de compactage (8 et/ou 9).

15. Procédé selon la revendication 13 ou 14, **caractérisé en ce que** pendant le processus de compactage au moyen du dispositif de compactage (8, 9) et de la réduction de volume liée du produit, le matériau restant est dosé ultérieurement depuis la chambre intermédiaire (3).

16. Procédé selon l'une quelconque des revendications précédentes 13 à 15, **caractérisé en ce que** le niveau dans l'emballage est surveillé avec un capteur de niveau (10) et le dosage est commandé en fonction du niveau.

17. Procédé selon l'une quelconque des revendications 13 à 16, **caractérisé en ce que** la vitesse de compactage et le débit volumique, avec lequel l'emballage (7) est rempli, sont ajustés l'un à l'autre de sorte qu'à aucun moment du processus de remplissage de l'emballage (7), un surremplissage de celui-ci n'apparaisse.

18. Procédé selon la revendication 17, **caractérisé en ce que** l'organe de dosage commande ou régule le flux de matière de telle sorte qu'il ne se produise pas de formation de pont dans la zone de la tubulure (6) par accumulation de matériau.
